# EUROPEAN PATENT APPLICATION

(11) **EP 4 564 822 A1**
(43) Date of publication of application: **04.06.2025**
(21) Application number: 24212681.1
(22) Date of filing: 13.11.2024
(51) Int. Cl.: H04N 21/234, H04N 21/434, H04N 21/44, H04N 21/81

(54) **HYBRID PRE AND POST PROCESSING**

(30) Priority: 28.11.2023 GB 202318137
(71) Applicant: Sony Interactive Entertainment Europe Limited, London W1F 7LP (GB)
(72) Inventor: PANESAR, Pritpal Singh, London, W1F 7LP (GB); STEMPLE, Lloyd Preston, London, W1F 7LP (GB); FLORES, Erick, London, W1F 7LP (GB); MONTI, Maria Chiara, London, W1F 7LP (GB)
(74) Representative: Murgitroyd & Company

(57) **Abstract**

There is provided a method of sending a content stream to a user electronic device, the method comprising obtaining content stream data in relation to the content stream to be rendered, encoding a first portion of the content stream data, rendering a second portion of the content stream data, and sending the encoded first portion and the rendered second portion to the user electronic device. There is also provided a method of rendering a content stream on a user electronic device, the method comprising receiving an encoded first portion of content stream data and a rendered second portion of the content stream data, decoding the first portion to obtain the content stream data in relation to a first portion of the content stream to be rendered, rendering the decoded first portion of the content stream data, and combining the rendered first portion of the content stream and the rendered second portion of the content stream to generate the content stream.

## Description

### BACKGROUND

The present specification relates to the sending, receipt, and outputting of content streams.

The streaming of content, for example on a TV, games console, computer, of mobile phone, for both educational, work and entertainment purposes is now a part of everyday life for most people. For example, a content stream may be a live sport or music event broadcast, a video game, a conference, or a video from a popular online streamer.

A content stream (or broadcast presentation) comprises content from a plurality of sources. Each source can provide one or more of audio, video, data, metadata or other content. Thus, a significant amount of information can be contained in a single content stream output to a viewer.

### SUMMARY

Aspects of the present disclosure are set out in the accompanying independent and dependent claims. Combinations of features from the dependent claims may be combined with features of the independent claims as appropriate and not merely as explicitly set out in the claims.

According to a first aspect of the present disclosure, there is provided a method of sending a content stream to a user electronic device, the method comprising obtaining content stream data in relation to the content stream to be rendered, encoding a first portion of the content stream data, rendering a second portion of the content stream data, and sending the encoded first portion and the rendered second portion to the user electronic device.

The content stream data may comprise a track, the track further comprising one or more elements.

The method further comprising obtaining data related to rendering requirements of the one or more elements, wherein the rendering requirements indicate a level of computational requirement to render of each of the one or more elements, determining that a first of the one or more elements is more computationally expensive to render, and causing the first of the one or more elements to be included in the first portion to be encoded, and determining that a second of the one or more elements is less computationally expensive to render, and causing the second of the one or more elements to be included in the second portion to be rendered.

This may be advantageous as the elements with higher rendering requirements can be sent to be rendered at the user electronic device where the processing capabilities are typically higher. This in turn reduces latency when sending a content stream to a user electronic device.

The content stream data may comprise a visual track defining a three dimensional scene comprising a virtual camera, wherein one or more elements are 3D elements which exist within the 3D scene.

Optionally, the method further comprises obtaining 3D positional data of the virtual camera and the one or more elements within the 3D scene, determining that a first of the one or more elements exists within a threshold distance d relative to virtual camera within the 3D scene, and causing the first of the one or more elements to be included in the first portion to be encoded, and determining that a second of the one or more elements exists beyond the threshold distance d relative to virtual camera within the 3D scene, and causing the second of the one or more elements to be included in the second portion to be rendered.

Optionally, the second of the one or more elements as included in the second portion is rendered as a two dimensional (2D) element at threshold distance d from the virtual camera within the 3D space.

This may be advantageous when sending a content stream comprising a visual track such as a video game. In the video game, it may be more important to have the elements in the foreground of the virtual camera such as a playable character to be rendered in a higher level of detail compared to elements further away from the virtual camera. Rendering one or more elements which are further away as a single 2D element may reduce the overall processing requirements when sending a visual track, thus reducing latency.

Optionally, the method further comprises obtaining virtual camera viewpoint data the virtual camera within the 3D scene, wherein the virtual camera viewpoint data comprises information about the elements which are within the viewing area A of the virtual camera, determining that a first of the one or more elements exists within a viewing area A of the virtual camera within the 3D scene, and causing the first of the one or more elements to be included in the first portion to be encoded, and determining that a second of the one or more elements exists outside the viewing area A of the virtual camera within the 3D scene, and causing the second of the one or more elements to be included in the second portion to be rendered.

Optionally, the second of the one or more elements as included in the second portion is rendered as low level of detail (LOD) elements.

This may be advantageous when sending a content stream comprising a visual track such as a video game. In augmented reality (AR) and virtual reality (VR) video games for example, it may be more important to have the elements in the specific field of view of the virtual camera to be rendered in a higher level of detail compared to elements outside the virtual camera's field of view. Rendering the elements outside the virtual camera's view at a lower LOD may reduce the overall processing requirements when sending a visual track, thus reducing latency.

Optionally, the content stream data (100) is obtained by a sender (13).

According to a second aspect of the present disclosure, there is provided a method of rendering a content stream on a user electronic device, the method comprising receiving an encoded first portion of content stream data and a rendered second portion of the content stream data, decoding the first portion to obtain the content stream data in relation to a first portion of the content stream to be rendered, rendering the decoded first portion of the content stream data, and combining the rendered first portion of the content stream and the rendered second portion of the content stream to generate the content stream.

Optionally, the content stream comprises a 3D scene, wherein the 3D scene comprises one or more 3D elements.

Combining the first portion and the second portion may comprise obtaining positional data relating to the one or more elements, wherein the positional data comprises a location of each the one or more elements within the 3D scene, and overlaying a first of the one or more elements against a second of the one or more elements based on the positional data to generate the content stream.

Optionally, the positional data is recorded and used to train an artificial neural network (ANN), and wherein the trained ANN is used to determine how the first and second elements are overlaid to generate the content stream.

According to a third aspect of the present disclosure, there is provided a sender device comprising a processor, and memory including executable instructions that, as a result of execution by the processor, cause the sender electronic device to perform the computer-implemented method of any embodiment or example of the first aspect of the disclosure.

According to a fourth aspect of the present disclosure, there is provided user electronic device, comprising a display screen, a processor and memory including executable instructions that, as a result of execution by the processor, cause the user electronic device to perform the computer-implemented method of any example or embodiment of the second aspect of this disclosure.

### BRIEF DESCRIPTION OF THE DRAWINGS

Embodiments of this disclosure will be described hereinafter, by way of example only, with reference to the accompanying drawings in which like reference signs relate to like elements and in which:
Figure 1A is a block diagram illustrating a system according to an embodiment of this disclosure;
Figure 1B is a block diagram representing content stream data according to an embodiment of this disclosure;
Figure 1C is a block diagram representing output data according to an embodiment of this disclosure;
Figure 2 is a block diagram illustrating a user electronic device or a sender device according to an embodiment of this disclosure;
Figure 3 is a flowchart illustrating a method of sending a content stream to a user electronic device according to an embodiment of this disclosure;
Figure 4 is a flowchart illustrating a method of portioning elements within a track based on rendering computational expense according to an embodiment of this disclosure;
Figure 5 is a flowchart illustrating a method of portioning elements within a visual track according to an embodiment of this disclosure;
Figure 6A - 6G illustrate a 3D scene as defined by a visual track according to an embodiment of this disclosure;
Figure 7 is a flowchart illustrating a method of portioning elements within a visual track based on virtual camera viewing area according to an embodiment of this disclosure;
Figure 8 illustrates a further 3D scene as defined by a visual track according to an embodiment of this disclosure;
Figure 9 is a flowchart illustrating a method of rendering a content stream on a user electronic device according to an embodiment of this disclosure.

### DETAILED DESCRIPTION

Embodiments of this disclosure are described in the following with reference to the accompanying drawings.

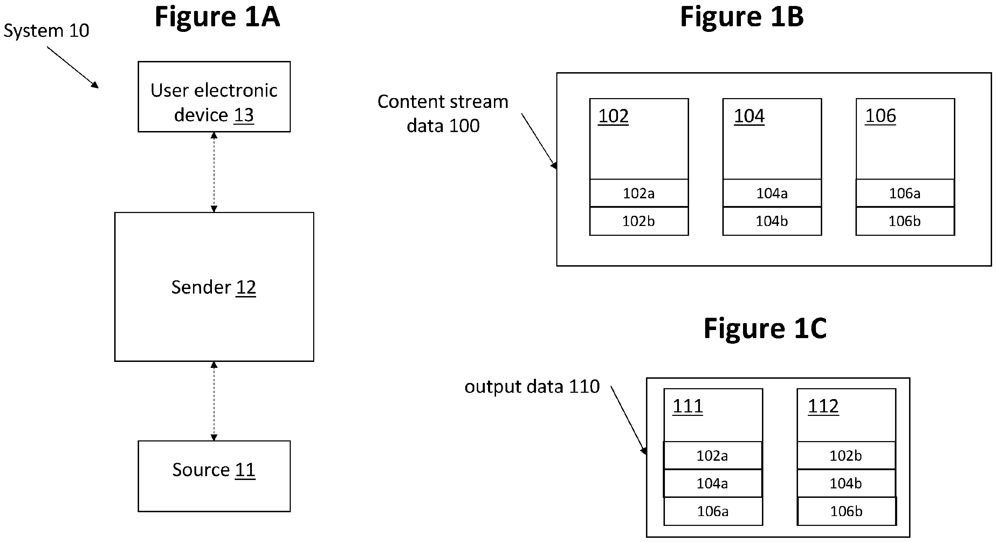

Figure 1A is a simplified representation of a system 10 according to an embodiment of this disclosure. A sender 12 is configured to communicate with a user electronic device 13 via wireless communication channels (represented by the dotted lines). It will be appreciated that although Figure 1A shows one user electronic device 13, any number of user electronic devices may be in communication with the sender 12. The sender 12 is also an electronic device. The sender 12 may be referred to as a broadcaster. It will be appreciated that the term computing device may be used interchangeably with electronic device in the present disclosure.

The user electronic device 13 and the sender 12 may be any type of computing device, including but not limited to, a PC, laptop, tablet computer, mobile phone, television or smart TV, smart watch, and/or gaming console. It will be appreciated that the sender 12 and the user electronic device 13 may comprise a plurality of electronic devices operably in communication with each other.

The wireless communication channels between the sender 12 and the user electronic device 130 may be any type of wireless communication channel. For example, the sender 12 may communicate with the user electronic device 13 via Wi-Fi^{®} or other wireless internet connection, NFC, Bluetooth^{®}, etc.

A source 11 is also in operable communication with the sender 12. The source 11 is configured to provide an input content stream to the sender 12, wherein the input content stream comprises a plurality of tracks. In an embodiment, the source 11 may be the sender 12. In an embodiment, at least one of the tracks may be provided by the sender 12.

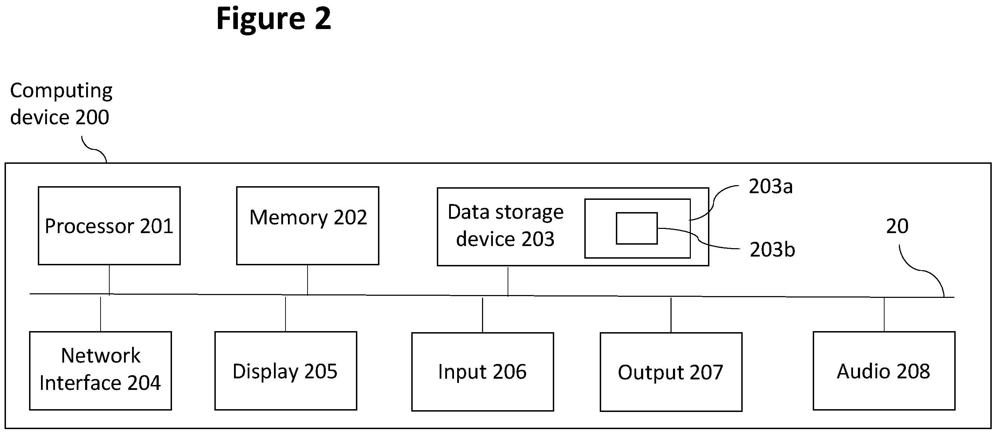

Figure 2 illustrates a block diagram of one example implementation of a computing device 200 that may form part of the sender 12 or the user electronic device 13.

The computing device 200 is associated with executable instructions for causing the computing device 200 to perform any one or more of the methodologies discussed herein. The computing device 200 may operate in the capacity of the data model or one or more computing resources for implementing the data model for carrying out the methods of the present disclosure. In alternative implementations, the computing device 200 may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term "computing device" shall also be taken to include any collection of machines (e.g., computers) that individually or jointly execute a set (or multiple sets) of instructions to perform any one or more of the methodologies discussed herein.

The example computing device 200 includes a processing device 201, a memory device 202, and a secondary memory (e.g., a data storage device 203), which communicate with each other via a bus 20. The memory device may be read-only memory (ROM), flash memory, dynamic random-access memory (DRAM) such as synchronous DRAM (SDRAM) or Rambus DRAM (RDRAM), static random-access memory (SRAM), etc.

Processing device 201 represents one or more general-purpose processors such as a microprocessor, central processing unit, or the like. More particularly, the processing device 201 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processing device 201 may also be one or more special-purpose processing devices such as an application specific integrated circuit (ASIC), afield programmable gate array (FPGA), a digital signal processor (DSP), network processor, or the like. Processing device 201 is configured to execute the processing logic (instructions 203b) for performing the operations and steps discussed herein.

The computing device 200 may further include a network interface device 204. The computing device 200 also may include a video display unit 205 (e.g., a liquid crystal display (LCD) or a cathode ray tube (CRT)), and an audio device 208 (e.g., a speaker). The computing device 200 may further include a data input 206 and a data output 207 to receive and send data to and from the computing device 200.

The data storage device 203 may include one or more machine-readable storage media (or more specifically one or more non-transitory computer-readable storage media) 203a on which is stored one or more sets of instructions 203b embodying any one or more of the methodologies or functions described herein. The instructions 203b may also reside, completely or at least partially, within the memory device 202 and/or within the processing device 201 during execution thereof by the computer system 200, the memory device 202 and the processing device 201 also constituting computer-readable storage media.

The various methods described above may be implemented by a computer program. The computer program may include computer code arranged to instruct a computer to perform the functions of one or more of the various methods described above. The computer program and/or the code for performing such methods may be provided to an apparatus, such as a computer, on one or more computer readable media or, more generally, a computer program product. The computer readable media may be transitory or non-transitory. The one or more computer readable media could be, for example, an electronic, magnetic, optical, electromagnetic, infrared, or semiconductor system, or a propagation medium for data transmission, for example for downloading the code over the Internet. Alternatively, the one or more computer readable media could take the form of one or more physical computer readable media such as semiconductor or solid-state memory, magnetic tape, a removable computer diskette, a random-access memory (RAM), a read-only memory (ROM), a rigid magnetic disc, and an optical disk, such as a CD-ROM, CD-R/W or DVD.

In an implementation, the modules, components and other features described herein can be implemented as discrete components or integrated in the functionality of hardware components such as ASICS, FPGAs, DSPs or similar devices.

A "hardware component" is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase "hardware component" should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

Unless specifically stated otherwise, as apparent from the following discussion, it is appreciated that throughout the description, discussions utilizing terms such as "providing", "calculating", "computing," "identifying", "detecting ", "establishing" , "training", "determining", "storing", "generating" ,"checking", "obtaining" or the like, refer to the actions and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

A simplified representation of content stream data 100 is shown in Figure 1B. The content stream data 100 is received by the sender 12 and processed before outputting to the user electronic device 13. The content stream data 100 comprises a plurality of tracks 102-106. It will be appreciated that although Figure 1B shows three tracks, the content stream data 100 may comprise any number of tracks. It will be also appreciated that more than one type of track may be provided.

Each track 102-106 represents a specific division of the content stream (as defined by the content stream data 100) which when combined forms the complete content stream. In this embodiment, track 102 is a visual track (defining a visual representation of the content stream), track 104 is an audio track (defining an audio representation of the content stream), and track 106 is a data track (defining any additional data of the content stream). In a further embodiment, the plurality of tracks can include two or more audio tracks, or two or more visual tracks, or two or more data tracks.

Each track 102-106 defines one or more elements of the specific division of the content stream. As shown in Figure 1B, visual track 102 defines visual elements 102a and 102b, audio track 104 defines audio elements 104a and 104b, and data track 106 defines data elements 106a and 106b.

In an example, the visual track 102 may define a three dimensional (3D) scene with elements such as a playable character and foreground objects surrounding the character. In this example, the visual element 102a may be the playable character and visual element 102b may be the foreground objects.

In an example, the audio track 104 may define an audio profile of the content stream. In this example, the audio element 104a may be audio for the footsteps of a character and the audio element 104b may be background sounds.

Although tracks 102-106 in Figure 1B are shown to define two elements, a track is not limited to any specific number of elements and may define any number of elements which represents a specific division of the content stream. For example, data track 106 may define one or more of a plurality of elements such as game play information, user interface information, at least one GUI element, player information, environmental information such as the weather, metadata, or any other additional data of the content stream.

The content stream data 100 is processed by the sender 12 and sent, as output data to the user electronic device 13. A simplified representation of the output data 110 is shown in Figure 1C.

As part of the processing performed at sender 12, the elements of each track 102-106 are divided into one or more portions. As shown in Figure 1C, a first portion 111 includes elements 102a, 104a, and 106a, and a second portion 112 includes 102b, 104b, and 106b. When the portions 111, 112 are combined, the combination of the elements form a complete representation of the content stream as defined by the content stream data 100.

It will be appreciated that the present disclosure is not limited to the output data comprising just two portions as shown in Figure 1C. The elements as defined by the tracks may be divided into any number of portions depending on the number of tracks and the number of elements as defined by the tracks. Furthermore, it will also be appreciated that the present disclosure is not limited to each portion including just three elements as shown in Figure 1C. One or more portion may include a single element, a plurality of elements, or no elements (explained in further detail below). For example, given a visual track comprising a plurality of elements such as a playable character, a foreground object such as a tree, a further foreground object such as a bush, and mountains in the background, a first portion may define the playable character and the foreground objects, whilst a second portion may define the mountains in the background.

As will be explained in more detail below, a number of portioning schemes may be utilized to determine which elements of a track are to be included in which one or more portions.

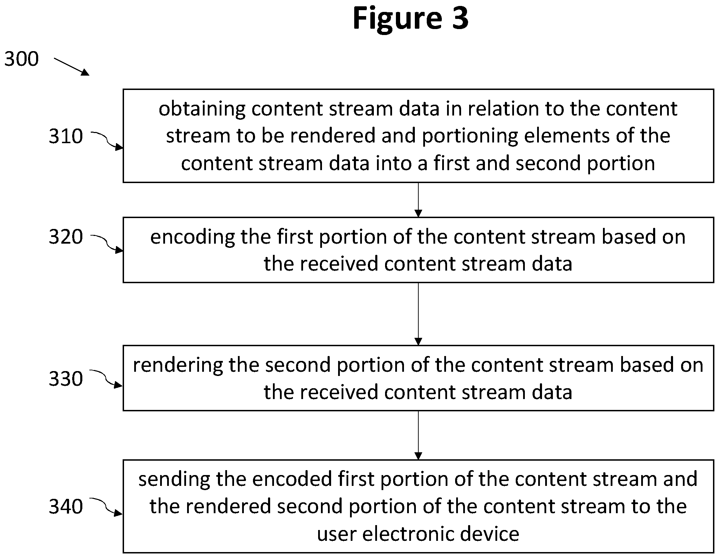

A method 300 of sending a content stream to a user electronic device according to an embodiment of this disclosure is illustrated in the flowchart in Figure 3. As such, the method in Figure 3 is from the perspective of the sender 12.

At step 310, the method 300 includes obtaining content stream data 100 in relation to the content stream to be rendered and portioning elements of the content stream data 100 into a first and second portion 111, 112. In this embodiment, the sender 12 obtains the content stream data 100 from the source 11. However, in other embodiments the sender 12 may obtain the content data from another source, such as from memory (such as memory 202 of the computing device 200), or a storage means or a computing device in communication with the sender 12, or from a plurality of sources. In this embodiment, each of a plurality of sources may provide a different track of the content stream data 100.

In an alternative embodiment, the plurality of sources may be one or more sensors such as Time of Flight, or LiDAR sensors. In this embodiment, the content data may comprise live sensor data which provide spatial/perspective information.

As mentioned above, the content stream data 100 comprises one or more tracks 102-106 which comprise a plurality of elements each. As will be mentioned in further detail below, the present disclosure utilises one or more methods of portioning the elements of the one or more tracks 102-106. In this embodiment, the sender 12 determines which of the one of more elements of the tracks within the content stream data 100 are to be included in a first portion 111 and a second portion 112 of output data 110.

At step 320, the method 300 includes encoding the first portion of the content stream data. Once it is determined which of the one or more elements are to be included in the first portion 111 of the output data 110, the sender 12 includes the determined element(s) in the first portion 111 and encodes the first portion 111 of the output data 110.

At step 330, the method 300 includes rendering a second portion of the content stream data. Once it is determined which of the one or more elements are to be included in the second portion 112 of the output data 110, the sender 12 includes the determined element(s) in the second portion 112 and renders the second portion 112 of the output data 110.

Encoding the first portion 111 may utilise traditional encoding formats such as mp4 and VP8/VP9. In an example, the traditional encoding formats may be used in conjunction with highly-compressed or very low data infill. In this example, the first portion 111 may be encoded with the highly-compressed or very low data infill which may act as a placeholder for the second portion 112.

At step 340, the method 300 includes sending the encoded first portion and the rendered second portion to the user electronic device 13. In this embodiment, the sender 12 sends the output data 110 comprising the first and second portions 111, 112 to the user electronic device 13 via a wireless communication channel. The present disclosure is not limited to this form of communication however, and in other embodiments any suitable communication platform may be used.

The first and second portions 111, 112 may be sent to the user electronic device 13 using multiplexing and/or multi-channel transmission which may comprise multiple wireless communication channels. In an example, a first channel may comprise the encoded first portion 111, whilst a second channel may comprise the rendered second portion 112.

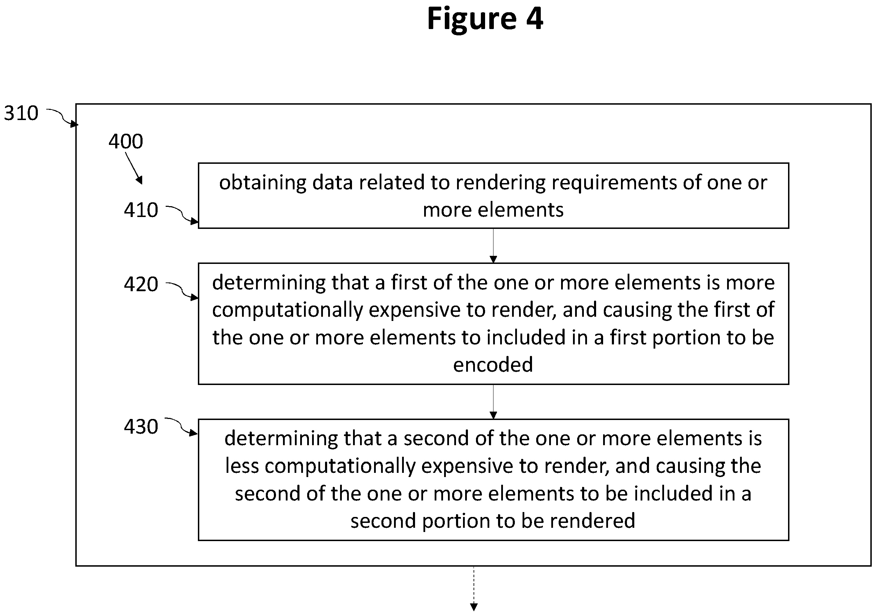

Figures 4, 5 and 7 show methods 400, 500, and 700, which are alternative embodiments of portioning the elements of the content stream data 100 in accordance with step 310.

A method 400 of portioning elements within a track based on rendering computational expense according to an embodiment of this disclosure is illustrated in the flowchart in Figure 4. As such, the method in Figure 4 is from the perspective of the sender 12. Further reference is made to Figures 1B and 1C.

At step 410, method 400 includes obtaining data related to rendering requirements of one or more elements. The rendering requirements are indicative of a level of computation that is required to render each of the one or more elements within the track.

In the embodiment described herein, the content stream is a video game. A video game content stream may typically comprise a combination of tracks which include a visual track(s), an audio track(s), and a data track(s). In this embodiment, the sender 12 receives content stream data 100 which includes tracks 102-106 and data relating to the rendering requirements of each of the elements within the tracks 102-106. For simplicity, the following description focuses on a visual track 102 (as shown by the visual track 102 in Figure 1B) of the video game, however the same principles may be applied to any other type of track. The visual track 102 defines a 3D scene of the video game which includes one or more elements such as a playable character and background objects. For simplicity, the track 102 in the present embodiment may be considered to comprise a first element 102a and a second element 102b.

Returning to Figure 4, at step 420, the method 400 includes determining that a first of the one or more elements is more computationally expensive to render, and causing the first of the one or more elements to be included in a first portion to be encoded. Furthermore, at step 430, the method 400 includes determining that a second of the one or more elements is less computationally expensive to render, and causing the second of the one or more elements to be included in a second portion to be rendered.

The sender 12 identifies the elements of the visual track 102 and determines, based on the data relating to the rendering requirements, which of the first element 102a and second element 102b is more computationally expensive to render. For example, a playable character would typically be more computationally expensive as the character may comprise a higher level of detail compared to background objects such as trees or other types of greenery which surround the playable character within the 3D scene.

Once the sender 12 identifies which of the first element 102a and the second element 102b is more computationally expensive based on the obtained data, the sender 12 is able to portion out the tracks accordingly. In this embodiment, the sender 12 determines that the more computationally expensive element is to be included in a first portion 111 to be encoded, and the less computationally expensive element is to be included in a second portion 112 to be rendered. The portion with the more computationally expensive element, the first portion 111 in this case, would require more computation to render, and as such would be encoded to be sent to the user electronic device 13 (which would typically have more computational power to render more computationally expensive elements). Conversely, the portion with the less computationally expensive element, the second portion 112 in this case, would require less computation to render, and as such would be rendered at the sender 12 itself.

A track 102-106 may comprise a plurality of elements, and a portioning scheme such as method 400 may determine that one or more elements may be defined by one or more portions. As such, the portions of a track are not limited to define a single element per portion as mentioned above, and the track is not limited to having only a first and second portion.

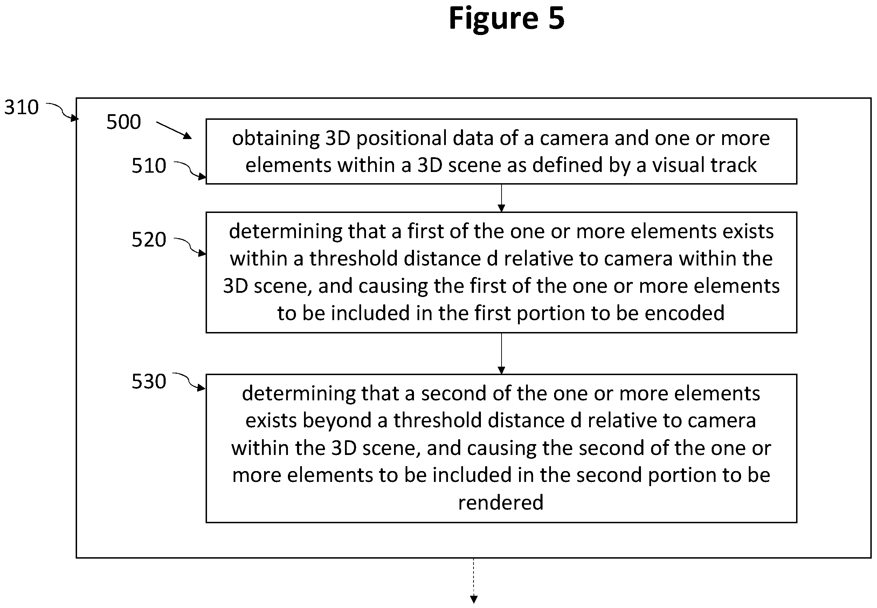

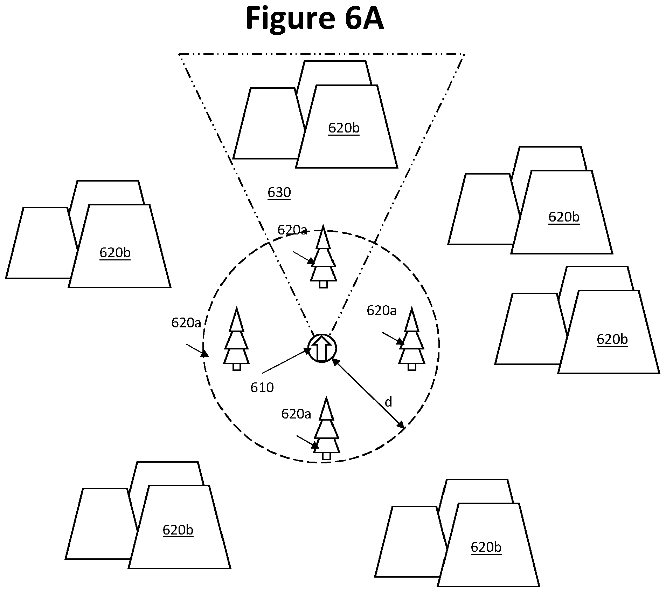

A method 500 of portioning elements within a visual track according to an embodiment of this disclosure is illustrated in the flowchart in Figure 5. As such, the method in Figure 5 is from the perspective of the sender 12. Further reference is made to Figures 6A - G which illustrate an example 3D scene as defined by the visual track of Figure 5, and Figure 1C.

Figure 6A illustrates an example 3D scene comprising 3D elements: foreground objects 620a (represented as trees) with respect to a virtual camera 610, and a plurality of background objects 620b (represented as mountains) with respect to the virtual camera 610.

At step 510, the method 500 includes obtaining 3D positional data of a virtual camera and one or more elements within a 3D scene as defined by a visual track. The sender 12 obtains positional data of all the elements within the 3D scene. This includes the virtual camera 610, the foreground objects 620a and the background objects 620b. The positional data is indicative of where, within the 3D scene, the elements of the visual track exist.

The positional data represents the position of the elements within the 3D scene in the Cartesian coordinate system. The present disclosure is not limited to this coordinate system and any coordinate system may be used.

At step 520, the method 500 includes determining that a first of the one or more elements exists within a threshold distance d relative to virtual camera within the 3D scene, and causing the first of the one or more elements to be included in the first portion to be encoded. Furthermore, at step 530, the method 500 includes determining that a second of the one or more elements exists beyond a threshold distance d relative to virtual camera within the 3D scene, and causing the second of the one or more elements to be included in the second portion to be rendered.

Based on the positional data of the virtual camera 610 and the elements 620a-620b, the sender 12 is able to then determine which of the elements 620a-620b exist within a threshold distance d from the virtual camera 610, and which of the elements 620a-620b exist beyond the threshold distance d from the virtual camera 610. For example, as seen in Figure 6A, the foreground objects 620a exist within an area of the 3D scene which is at a threshold distance d from the virtual camera 610. Figure 6A represents this area to be a circle around the virtual camera 610 with the distance d being the radius of the circle. Furthermore, as can be seen in Figure 6A, the background objects 620b exist in an area within the 3D scene which is beyond the threshold distance d from the virtual camera 610.

Applying steps 520 and 530 of the method 500 to the 3D scene of Figure 6A, once the sender 12 identifies which of the elements 620a-620b exist within/beyond the threshold distance d, the sender 12 is able to portion out the tracks accordingly. The sender 12 determines that the foreground objects 620a are within the threshold distance d, and as such determines that the foreground objects 620 are to be included in a first portion 111 of the output data 110 to be encoded. The sender also determines that the background objects 620b are beyond the threshold distance d, and as such determines that the background objects 620b are to be included in a second portion 112 of the output data 110 to be rendered. The foreground objects 620a are closer to the virtual camera and would need to be rendered at a higher level of detail compared to the background objects 620b which appear to be far away.

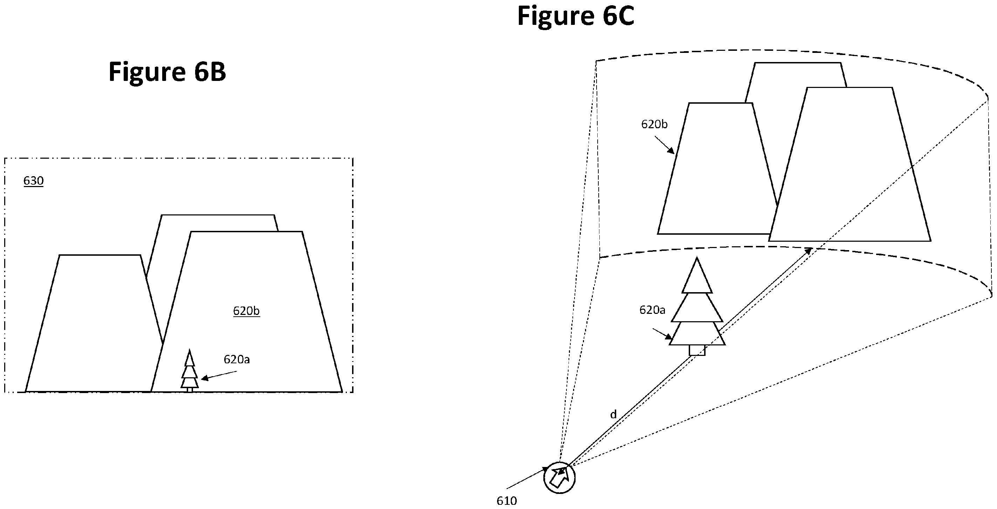

Still referring to Figure 6A, there is shown a virtual camera view 630 depicting the viewing area of the virtual camera 610 within the 3D scene. For simplicity, a single foreground object 620a and a single background object 620b exist within the viewing area. Although the foreground object 620a is shown to be within the threshold distance d from the virtual camera 610 and the background object 620b is shown to be beyond the threshold distance d from the virtual camera 610, these elements 620a-620b are seen to be overlapping from the viewpoint of the virtual camera 610 (see Figure 6B which shows the viewpoint of the virtual camera 610).

In an embodiment, after determining that the background object 620b exists beyond the threshold distance d from the virtual camera, the sender 12 renders the background object 620b as a two dimensional (2D) element at the threshold distance d from the virtual camera within the 3D space. Reference is made to Figure 6C which shows the background object 620b rendered as a 2D vista at the threshold distance d from the virtual camera 610. In this embodiment, the foreground object 620a which exists within the threshold distance d is still rendered as a 3D element at its original position within the 3D scene. From the viewpoint of the virtual camera 610, the foreground object 620a still appears to be in front of the background object 620b as shown in Figure 6B despite the background object 620b being a 2D vista.

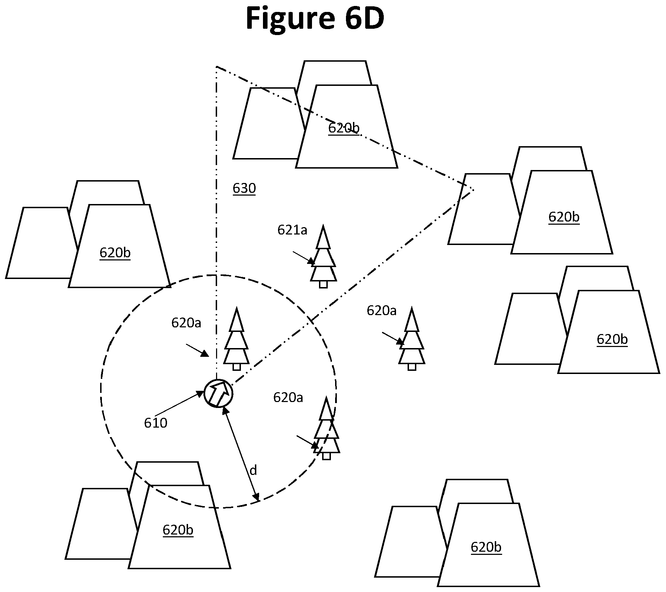

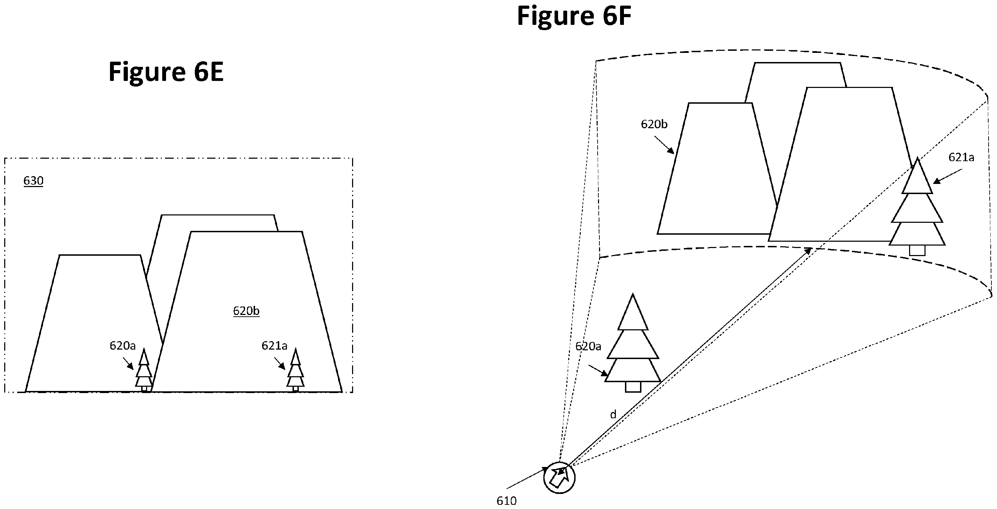

As the virtual camera 610 moves around within the 3D scene, the sender 12 updates the portions 111, 112 such that the number of elements in each portion changes in real time depending on which elements within the 3D scene exist within the threshold distance d from the virtual camera 610. For example, if the virtual camera 610 were to move to a new position as shown in Figure 6D, the elements within/beyond the threshold distance d would also change. As shown in figure 6D, according to the new viewpoint of the virtual camera 610, a first foreground object 620a exists within the threshold distance d from the virtual camera 610, and a second foreground object 621a along with a background object 620b exist beyond the threshold distance d from the virtual camera 610 (see figure 6E for the viewpoint of the virtual camera 610). In this embodiment, the sender 12 determines that the foreground object 620a is within the threshold distance d, and as such determines that the foreground object 620a is to be included in a first portion 111 of the output data 110 to be encoded. The sender 12 also determines that the foreground object 621a and the background object 620b are beyond the threshold distance d, and as such determines that the foreground object 621a and the background object 620b are to be included in a second portion 112 of the output data 110 to be rendered. Furthermore, Figure 6F shows how, according to this embodiment, the sender 12 renders the foreground object 621a and the background object 620b as a two dimensional (2D) element at the threshold distance d from the virtual camera within the 3D space.

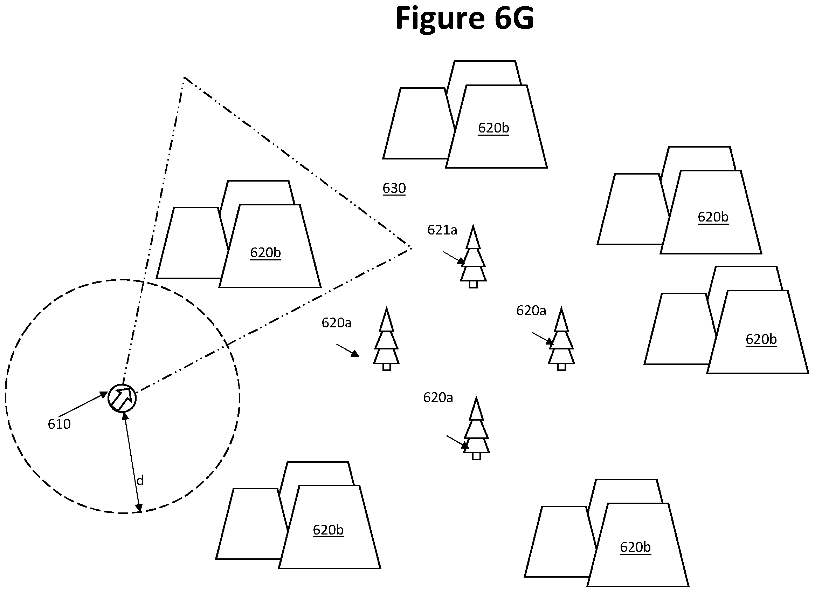

In a further example, if the virtual camera 610 were to move to a new position as shown in Figure 6G, the elements within/beyond the threshold distance d would once again change. As shown in figure 6G, according to the new viewpoint of the virtual camera 610, no objects exists within the threshold distance d from the virtual camera 610, and a background object 620b exists beyond the threshold distance d from the virtual camera 610. In this embodiment, the sender 12 determines that no visual element is to be included in a first portion 111 of the output data 110 to be encoded. The sender 12 also determines that the background object 620b is beyond the threshold distance d, and as such determines that the background object 620b is to be included in a second portion 112 of the output data 110 to be rendered. Similarly, if the virtual camera 610 were to move to a new position where no elements exist within and beyond the threshold distance d, the sender would determine that no visual elements are to be included in the first portion 111 or the second portion 112 of the output data 110 to be encoded and rendered.

The sender 12 is not limited to encoding/rendering only the elements within the viewpoint of the virtual camera 610 however. In an embodiment, the sender 12 encodes/renders all the elements which exist within/beyond the threshold distance d from the virtual camera 610. This includes any elements which may exist above and below the virtual camera 610 (not shown). In this embodiment, the sender 12 renders all the elements which exist beyond the threshold distance d as a spherical vista which surrounds the virtual camera 610.

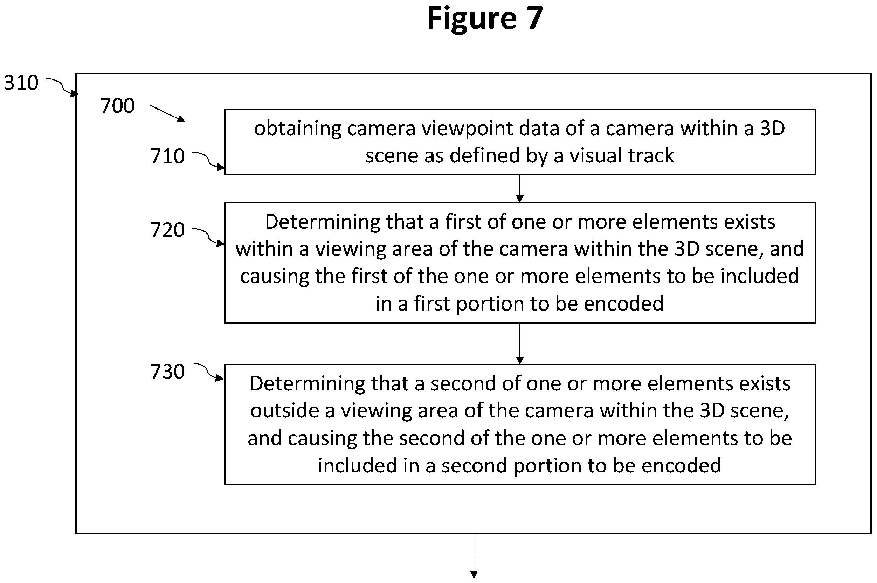

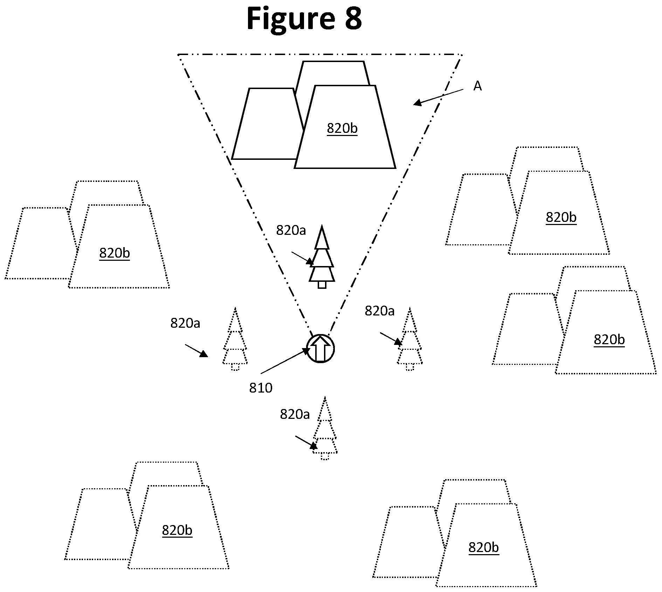

A method 700 of portioning elements within a visual track based on virtual camera viewing area according to an embodiment of this disclosure is illustrated in the flowchart in Figure 7. As such, the method in Figure 7 is from the perspective of the sender 12. Further reference is made to Figure 8 which illustrate an example 3D scene as defined by the visual track of Figure 7, and Figure 1C.

Figure 8 illustrates an example 3D scene comprising 3D elements: foreground objects 820a (represented as trees) with respect to a virtual camera 810, and a plurality of background objects 820b (represented as mountains) with respect to the virtual camera 810.

At step 710, the method 700 includes obtaining virtual camera viewpoint data of a virtual camera within a 3D scene as defined by a visual track. The sender 12 obtains the viewpoint data, which includes viewing area A of the virtual camera 810 within the 3D scene. The viewing angle A includes the area of the 3D scene which can be seen by the virtual camera 810.

At step 720, the method 700 includes determining that a first of one or more elements exists within a viewing area of the virtual camera within the 3D scene, and causing the first of the one or more elements to be included in a first portion to be encoded. Furthermore, at step 730, the method 700 includes determining that a second of one or more elements exists outside a viewing area of the virtual camera within the 3D scene, and causing the second of the one or more elements to be included in a second portion to be encoded.

Based on the viewpoint data, the sender 12 is able to determine which of the elements 820a-820b exist within/outside the viewing area A within the 3D scene. For example, as seen in Figure 8, the foreground objects 820a and background objects 820b which exist within the viewing area A are shown to have solid lines whilst all other elements 820a-820b are shown to have dotted lines.

Applying step 720 of the method 700 to the 3D scene of Figure 8, once the sender 12 identifies which of the elements 820a-820b exist within/outside the viewing angle A, the sender 12 is able to portion out the tracks accordingly. The sender 12 determines that the elements 820a-820b which are within viewing angle A are to be included in a first portion 111 of the output data 110 to be encoded. Conversely, the sender 12 determines that the elements 820a-820b which are outside viewing angle A are to be included in a second portion 112 of the output data 110 to be rendered.

The sender 12 may render all the elements which are outside the viewing angle A, and therefore included in the second portion 112, as low level of detail (LOD) elements. For example, the elements which are outside the viewing angle A may be rendered as a silhouette version of the original element. The determination of whether to utilise low LOD elements may be dependent upon, for example, the rendering capacity of the sender and the bandwidth of the network connection.

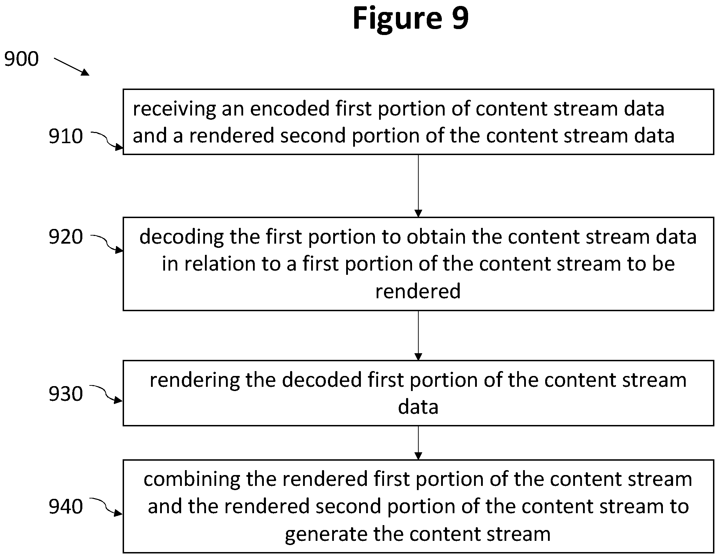

A method 900 of receiving a content stream at a user electronic device is illustrated in the flowchart in Figure 9. As such, the method in Figure 9 is from the perspective of the user electronic device 13.

At step 910, the method 900 includes receiving the encoded first portion 111 of content stream data and rendered second portion 112 of the content stream data sent by the sender 12 in the output data 110 at step 340. The user electronic device 13 receives the first and second portion from the sender 12 via a wireless communication channel, or by any other suitable communication channel.

The first and second portions 111, 112 may be received by the user electronic device 13 via multiplexing and/or multi-channel transmission which may comprise multiple wireless communication channels. In an example, a first channel may comprise the encoded first portion 111, whilst a second channel may comprise the rendered second portion 112.

At step 920, the method 900 includes decoding the first portion to obtain the content stream data in relation to a first portion of the content stream to be rendered. In an embodiment, the user electronic device 13 may process the first encoded portion to obtain the content steam data 100 prior to encoding.

The first portion 111 may have been encoded using traditional encoding formats such as mp4 and VP8/VP9. In an example, the traditional encoding formats may have been used in conjunction with highly-compressed or very low data infill. In this example, the first portion 111 may have been encoded with the highly-compressed or very low data infill which may act as a placeholder for the second portion 112. Decoding the first portion 111 may comprise separating the encoded first portion from the infill data so that the first portion 111 and the second portion 112 may be combined at a later stage.

At step 930, the method 900 includes rendering the decoded first portion of the content stream data 100.

At step 940, the method 900 includes combining the rendered first portion and the rendered second portion to generate the content stream.

In the embodiment being described, the content stream is a video game. The user electronic device 13 receives output data 110 comprising an encoded first portion 111 of content stream data 100 and a rendered second portion 112 of content stream data 100. For simplicity, the description focuses on a visual track 102 of the video game, however the same principles may be applied to any other type of track.

The visual track 102 defines a 3D scene with one or more 3D elements of the video game such as the one illustrated in Figures 6A-G. For example, a first element 102a may define a playable character, whilst a second element 102b may define the foreground of the playable character within the 3D scene. As such, the encoded first portion 111 comprises encoded data relating to a first visual content within the 3D scene, for example the playable character. The rendered second portion 112 comprises visual data depicting the compiled data relevant to a second visual content within the 3D scene, for example the foreground of the playable character.

Once the encoded first portion 111 and the rendered second portion 112 have been received by the user electronic device 13, the encoded first portion 111 is then decoded by the user electronic device 13 to obtain data which can be compiled and rendered to provide a rendered version of the first element 102a of the visual track 102. This rendered first portion 102a of the visual track 102 is then combined with the rendered second element 102b of the visual track 102 to generate the fully rendered visual track 102. Similar steps would take place for a different type of track.

In an example, with reference to Figures 6A-G, the first element 102a of the visual track 102 may be a foreground object 620a, and the second element 102b of the visual track 102 may be a background object 620b. In this example, once the first portion 111 has been decoded and rendered, the user electronic device 13 may combine the two rendered portions to provide a complete rendered visual track with the foreground object 620a and the background object 620b in their respective locations within the complete 3D scene as illustrated in Figure 6A.

The user electronic device 13 may also receive positional data from the sender 12. The positional data may relate to the positions of the first element 102a and second element 102b within the 3D scene. When the user electronic device 13 combines the two rendered portions, the positional data may be utilised to determine the correct positions of the first and second elements 102a, 102b within the 3D scene and the two rendered elements may be overlaid accordingly.

In an example, an artificial neural network (ANN) may be utilised to further process the rendered first portion 102a of the visual track 102 and the rendered second element 102b of the visual track 102 at the combining stage. An ANN may be used to smooth over or fill out artefacts (e.g., soften aliased edges, or infill disocclusion artefacts caused by perspective shifts) prior to generating the fully rendered visual track 102.

Accordingly, there has been described an method of sending a content stream to a user electronic device, the method comprising obtaining content stream data in relation to the content stream to be rendered, encoding a first portion of the content stream data, rendering a second portion of the content stream data, and sending the encoded first portion and the rendered second portion to the user electronic device. There has also been described a method of rendering a content stream on a user electronic device, the method comprising receiving an encoded first portion of content stream data and a rendered second portion of the content stream data, decoding the first portion to obtain the content stream data in relation to a first portion of the content stream to be rendered, rendering the decoded first portion of the content stream data, and combining the rendered first portion of the content stream and the rendered second portion of the content stream to generate the content stream.

Although particular embodiments of this disclosure have been described, it will be appreciated that many modifications/additions and/or substitutions may be made within the scope of the claims.

## Claims

1. A method of sending a content stream to a user electronic device (13), the method comprising:
obtaining (310), content stream data (100) in relation to the content stream to be rendered, wherein the content stream data comprises a track (102, 104, 106), the track (102, 104, 106) further defining one or more elements;
obtaining (410) data related to rendering requirements of the one or more elements, wherein the rendering requirements indicate a level of computational requirement to render of each of the one or more elements;
determining (420) that a first of the one or more elements is more computationally expensive to render, and causing the first of the one or more elements to be included in a first portion to be encoded;
determining (430) that a second of the one or more elements is less computationally expensive to render, and causing the second of the one or more elements to be included in a second portion to be rendered;
encoding (320) the first portion of the content stream data (100);
rendering (330) the second portion of the content stream data (100); and
sending (340) the encoded first portion and the rendered second portion to the user electronic device (13).

2. the method of claim 1, wherein the track (102, 104, 106) is a visual track defining a three dimensional (3D) scene (600) comprising a virtual camera (610), wherein one or more elements (620a, 620b) are 3D elements which exist within the 3D scene (600).

3. the method of claim 2, the method further comprising:
obtaining (510) 3D positional data of the virtual camera (610) and the one or more elements (620a, 620b) within the 3D scene (600);
determining (520) that a first of the one or more elements (620a, 620b) exists within a threshold distance d relative to virtual camera (610) within the 3D scene (600), and causing the first of the one or more elements (620a, 620b) to be included in the first portion to be encoded; and
determining (530) that a second of the one or more elements (620a, 620b) exists beyond the threshold distance d relative to virtual camera (610) within the 3D scene (600), and causing the second of the one or more elements (620a, 620b) to be included in the second portion to be rendered.

4. the method of claim 3, wherein the second of the one or more elements (620a, 620a) in the second portion is rendered as a two dimensional (2D) element at threshold distance d from the virtual camera within the 3D space.

5. the method of claim 2, the method further comprising:
obtaining (710) virtual camera viewpoint data the virtual camera (610) within the 3D scene (600), wherein the virtual camera viewpoint data comprises information about the elements (620a, 620b) which are within the viewing area A of the virtual camera (610);
determining (520) that a first of the one or more elements (620a, 620b) exists within a viewing area A of the virtual camera (610) within the 3D scene (600), and causing the first of the one or more elements (620a, 620b) to be included in the first portion to be encoded; and
determining (530) that a second of the one or more elements (620a, 620b) exists outside the viewing area A of the virtual camera (610) within the 3D scene (600), and causing the second of the one or more elements (620a, 620b) to be included in the second portion to be rendered.

6. the method of claim 5, wherein the second of the one or more elements (620a, 620a) in the second portion is rendered as low level of detail (LOD) elements.

7. the method of any preceding claim, wherein the content stream data (100) is obtained by a sender (13).

8. A method of rendering a content stream on a user electronic device (13), the method comprising:
Receiving an encoded first portion of content stream data (100) and a rendered second portion of the content stream data (100);
decoding the first portion to obtain the content stream data (100) in relation to a first portion of the content stream to be rendered;
rendering the decoded first portion of the content stream data (100); and
combining the rendered first portion of the content stream and the rendered second portion of the content stream to generate the content stream.

9. the method of claim 8, wherein the content stream comprises a 3D scene, wherein the 3D scene comprises one or more 3D elements.

10. the method of claim 9, wherein combining the first portion and the second portion comprises:
obtaining positional data relating to the one or more elements, wherein the positional data comprises a location of each the one or more elements within the 3D scene; and
overlaying a first of the one or more elements against a second of the one or more elements based on the positional data to generate the content stream.

11. The method of claim 10, wherein the positional data is recorded and used to train an artificial neural network (ANN), and wherein the trained ANN is used to determine how the first and second elements are overlaid to generate the content stream.

12. A sender device comprising:
a processor; and
memory including executable instructions that, as a result of execution by the processor, causes the sender electronic device to perform the computer-implemented method of any of claims 1 to 7.

13. A user electronic device, comprising:
a display screen;
a processor; and
memory including executable instructions that, as a result of execution by the processor, causes the user electronic device to perform the computer-implemented method of any of claims 8 to 11.
